**Europäisches Patentamt**

**European Patent Office**

**Office européen des brevets**

(11) Veröffentlichungsnummer: **0 515 776 A1**

# EUROPÄISCHE PATENTANMELDUNG

(21) Anmeldenummer: **92103503.6**

(22) Anmeldetag: **29.02.92**

(51) Int. Cl.5: **F01N 3/02**, B01D 46/24

(30) Priorität: **29.05.91 DE 4117602**

(43) Veröffentlichungstag der Anmeldung:
**02.12.92 Patentblatt 92/49**

(84) Benannte Vertragsstaaten:
**AT BE CH DE DK ES FR GB GR IT LI NL PT SE**

(71) Anmelder: **ERNST-APPARATEBAU GmbH & Co.
Wandhofener Strasse 2
W-5800 Hagen 1(DE)**

(72) Erfinder: **Krumme, Karl-Heinz, Dipl.-Ing.
Unionstrasse 5
W-4760 Werl(DE)**

(74) Vertreter: **Patentanwaltsbüro Cohausz & Florack
Schumannstrasse 97
W-4000 Düsseldorf 1(DE)**

(54) **Russfilterkerze für Dieselmotoren.**

(57) Die Erfindung betriffte eine Rußfilterkerze für Dieselmotoren mit einem porösen Rohr 1, durch dessen Wandung von außen nach innen das Abgas tritt, wobei der Ruß sich an der Rohraußenwand ablagert, um dort nach Bildung einer Schicht bestimmter Dicke entfernt insbesondere abgebrannt zu werden, wobei die Außenwand de filternden Rohres 1 von einer Schicht 5 umgeben ist, die ein Gefüge von temperaturbeständigen Fasern aufweist.

Die Erfindung betrifft eine Rußfilterkerze für Dieselmotoren mit einem porösen Rohr, durch dessen Wandung von außen nach innen das Abgas hindurchtritt, wobei der Ruß sich an der Rohraußenwand ablagert, um dort nach Bildung einer Schicht bestimmter Dicke entfernt insbesondere abgebrannt zu werden.

Um bei Dieselmotoren den Ruß aus dem Abgas auszufiltern, ist es bekannt, Filterkerzen zu verwenden, die ein Rohr aus poröser gesinterter Keramik besitzen, dessen Wand von außen nach innen vom Abgas durchströmt wird, wobei sich der Ruß an der Außenseite des Rohres absetzt. Ein solcher Oberflächenfilter zeigt einen hohen Abscheidegrad und eine gute akustische Dämpfung, so daß häufig ein Schalldämpfer nicht mehr nachgeschaltet werden muß.

Darüberhinaus sind zur Rußfilterung Monolith-Filter insbesondere Wabenfilter und Tiefenfilter in Form von Gewebe oder Wicklungen bekannt. Diese besitzen aber einen geringeren Abscheidegrad bei hohem Aufnahmevolumen.

Aufgabe der Erfindung ist es, eine Rußfilterkerze der eingangs genannten Art so zu verbessern, daß bei einfacher Bauweise und guter akustischer Dämpfung ein hoher Abscheidegrad und ein großes Aufnahmevolumen erreichbar sind.

Diese Aufgabe wird erfindungsgemäß dadurch gelöst, daß die Außenwand des filternden Rohres von einer Schicht umgeben ist, die ein Gefüge von temperaturbeständigen Fasern aufweist.

Bei einer solchen Rußfilterkerze werden 4 bis 5 mal längere Beladungszeiten erreicht als bei reinen Oberflächenfiltern aus gesinterter Keramik. Die Fasern aufweisende äußere zylindrische Schicht bildet ein Tiefenfilter, das ca. 70 bis 80% des Rußes aufnimmt. Das darunterliegende Keramikrohr filtert dann noch als Oberflächenfilter einen erheblich weiteren Prozentsatz ab, so daß eine Gesamtabscheidung von 95 bis 98% erreicht wird.

Diese Konstruktion besitzt bei einfacher Bauweise eine hohe Lebensdauer und läßt sich bei unterschiedlichsten Motoren einsetzen.

Besonders vorteilhaft ist es, wenn die Schicht ein Gewebe, Gestricke, Gewirke, einen Wickel oder Filz aus temperaturbeständigen Fasern aufweist. Hierbei sollten die temperaturbeständigen Fasern aus Keramik oder Metall sein. Auch können die temperaturbeständigen Fasern aus aus gesinterter Keramik und/oder gesintertem Metall sein.

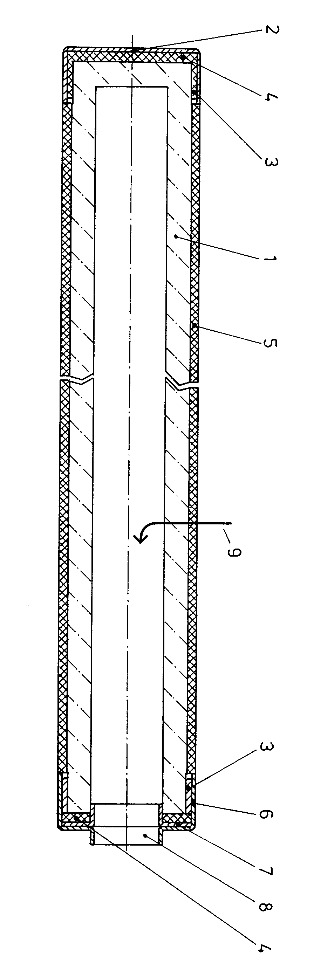

Ein Ausführungsbeispiel der Erfindung ist in der Zeichnung in einem Längsschnitt dargestellt und wird im folgenden näher beschrieben.

Die Rußfilterkerze weist ein Rohr 1 aus poröser gesinterter Keramik und/oder porösem gesinterten Metall als Oberflächenfilter auf, das außen von einer zylindrischen Schicht 5 aus einem Fasergefüge als Tiefenfilter umgeben ist. Die Fasern sind aus einer temperaturbeständigen Keramik und/oder einem temperaturbeständigen Metall und/oder aus Metallfasern, die mit gesinterter Keramik umhüllt sind, und als Gewebe, Gestricke, Gewirke oder als Filz angeordnet. Ferner können die Fasern als Wikkel auf der Außenseite des Rohrs 1 aufgelegt sein.

Die beiden Enden des Rohrs 1 liegen in einer ersten metallenen Zentrieraufnahme 2 und einer zweiten metallenen Zentrieraufnahme 6, wobei die zweite Zentrieraufnahme 6 zusammen mit einem metallenen Zentrierinnenteil 7 einen Auslaß 8 bildet, der koaxial zum Inneren des Rohrs 1 liegt. Zwischen der ersten Zentrieraufnahme 2 und der Stirnseite des Rohrs 1 liegt eine Blähmatte 4 aus Keramik und zwischen der Zentrieraufnahme 6,7 und der anderen Stirnseite des Rohrs 1 ist ein Blähmattenring 4 angeordnet. Ferner sind die beiden Enden des Rohrs 1 von buchsenförmigen Lagerungen 3 umgeben, die aus jeweils einem gepreßten Fasergefüge hoher Temperaturbeständigkeit insbesondere aus Keramik oder Metall bestehen.

Das Abgas durchdringt in Richtung des Pfeiles 9 von außen nach innen die zylindrische Wand des Rohrs 1, wobei der größte Teil des Rußes in der Schicht 5 verbleibt und ein geringerer Teil auf der Oberseite des Rohrs 1. Das gesäuberte Abgas verläßt die Filterkerze durch den Auslaß 8.

In einem Rußfiltergehäuse sind meist mehrere Rußfilterkerzen parallel nebeneinander befestigt, wobei alle Rußfilterkerzen in regelmäßigen Abständen durch einen Brenner (Hochleistungsölbrenner) außen abgebrannt werden, so daß die Rußpartikel sowohl in der Schicht 5 als auch auf dem Rohr verbrannt werden.

**Patentansprüche**

1.  Rußfilterkerze für Dieselmotoren mit einem porösen Rohr (1), durch dessen Wandung von außen nach innen das Abgas tritt, wobei der Ruß sich an der Rohraußenwand ablagert, um dort nach Bildung einer Schicht bestimmter Dicke entfernt insbesondere abgebrannt zu werden, **dadurch gekennzeichnet,** daß die Außenwand des filternden Rohres (1) von einer Schicht (5) umgeben ist, die ein Gefüge von temperaturbeständigen Fasern aufweist.

2.  Rußfilterkerze nach Anspruch 1, **dadurch gekennzeichnet,** daß die Schicht (5) ein Gewebe, Gestricke, Gewirke, einen Wickel und/oder Filz aus temperaturbestandigen Fasern aufweist.

3.  Rußfilterkerze nach Anspruch 2, **dadurch gekennzeichnet,** daß die temperaturbeständigen Fasern aus Keramik und/oder Metall sind.

4. Rußfilterkerze nach Anspruch 3, **dadurch gekennzeichnet,** daß die temperaturbeständigen Fasern aus gesinterter Keramik und/oder gesintertem Metall sind.

| | Europäisches Patentamt | EUROPÄISCHER RECHERCHENBERICHT | Nummer der Anmeldung |
|---|---|---|---|

EP 92 10 3503
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>Y | FR-A-2 600 907 (MAN NUTZFAHRZEUGE GMBH)<br>* Seite 5, Zeile 32 - Seite 10, Zeile 10;<br>Abbildungen 1-3 * | 1-3<br>4 | F01N3/02<br>B01D46/24 |
| Y | US-A-4 908 340 (F. J. FRECHETTE)<br>* Spalte 2, Zeile 43 - Spalte 3, Zeile 14 * | 4 | |
| X | WO-A-8 902 976 (FRENZELIT-WERKE GMBH & CO. KG)<br>* Seite 8, Zeile 1 - Seite 12, Zeile 22;<br>Abbildungen 1-4 *<br>* Seite 15, Zeile 1 - Zeile 25; Abbildungen 7,8<br>* | 1-3 | |
| X | EP-A-0 220 505 (MAN TECHNOLOGIE GMBH)<br>* Seite 2, Zeile 27 - Seite 6, Zeile 14 *<br>* Seite 10, Zeile 28 - Seite 13, Zeile 15;<br>Abbildungen 2-4 * | 1-3 | |
| A | DE-A-3 823 205 (FA. J. EBERSPÄCHER)<br>* Spalte 1, Zeile 65 - Spalte 2, Zeile 46 *<br>* Spalte 5, Zeile 16 - Spalte 6, Zeile 17;<br>Abbildungen 1-3 * | 1-3 | |
| A | EP-A-0 216 729 (SCHWEIZERISCHE ALUMINIUM AG)<br>* Spalte 3, Zeile 44 - Spalte 4, Zeile 36;<br>Abbildung 5 * | 1 | RECHERCHIERTE<br>SACHGEBIETE (Int. Cl.5)<br><br>F01N<br>B01D |
| A | DE-A-2 536 276 (SINTERMETALLWERK KREBSÖGE GMBH)<br>* Seite 3, Absatz 3 - Seite 5, Absatz 1;<br>Abbildungen 1-3 * | 1,4 | |
| A | DE-A-3 800 723 (DAIMLER-BENZ AG)<br>* das ganze Dokument * | 1 | |
| A | US-A-4 813 231 (B. B. BYKOWSKI)<br>* Spalte 3, Zeile 41 - Spalte 5, Zeile 32;<br>Abbildungen 1,2 * | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | HAKHVERDI M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes
    Dokument

EPO FORM 1503 03.82 (P0403)

Europäisches
Patentamt

**EUROPÄISCHER RECHERCHENBERICHT**

Nummer der Anmeldung

EP    92 10 3503
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-C-879 685 (SCHUMACHER'SCHE FABRIK)<br>* das ganze Dokument *<br><br>-----| 1 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | HAKHVERDI M. |

EPO FORM 1503 03.82 (P0403)